# EUROPEAN PATENT SPECIFICATION

(11) **EP 4 112 234 B1**
(45) Date of publication and mention of the grant of the patent: **10.07.2024**
(21) Application number: 21761520.2
(22) Date of filing: 17.02.2021
(51) Int. Cl.: B62D 57/032

(54) **LEGGED ROBOT AND METHOD FOR CONTROLLING LEGGED ROBOT**
MIT BEINEN VERSEHENER ROBOTER UND VERFAHREN ZUR STEUERUNG EINES MIT BEINEN VERSEHENEN ROBOTERS
ROBOT MARCHEUR ET PROCÉDÉ DE COMMANDE DE ROBOT MARCHEUR

(30) Priority: 28.02.2020 JP 2020034008
(43) Date of publication of application: 04.01.2023
(73) Proprietor: Sony Group Corporation, Tokyo 108-0075 (JP)
(72) Inventor: TAKASUGI, Noriaki, Tokyo 108-0075 (JP)
(74) Representative: D Young & Co LLP
(86) International application number: PCT/JP2021/005969
(87) International publication number: WO 2021/172139

(56) References cited:
- JP-A- 2002 307 340
- JP-A- 2003 089 081
- JP-A- 2009 214 255
- US-B1- 6 534 943

## Description

### LEGGED ROBOT AND METHOD OF CONTROLLING LEGGED ROBOT

### Technical Field

The present disclosure relates to a legged robot and a method of controlling a legged robot.

### Background Art

Various techniques have been proposed for improving stability during walking of a legged robot (see, for example, Patent Literatures 1 to 3).

### Citation List

### Patent Literature

Patent Literature 1: Japanese Unexamined Patent Application Publication No. S63-278773
Patent Literature 2: Japanese Unexamined Patent Application Publication No. 2006-255798
Patent Literature 3: Japanese Unexamined Patent Application Publication No. 2009-214255
Patent Literature 4: US Patent US 6534943 B1

### Summary of the Invention

In the techniques described in Patent Literatures 1 to 3, stability during walking is insufficient.

It is desirable to provide a legged robot and a method of controlling a legged robot that make it possible to improve stability during walking.

The invention is defined by the claims.

### Brief Description of the Drawings

[FIG. 1] FIG. 1 is an external configuration diagram schematically illustrating an example of an external configuration of a legged robot according to a first embodiment of the present disclosure.
[FIG. 2] FIG. 2 is a block diagram schematically illustrating an example of a configuration of a control system of the legged robot according to the first embodiment.
[FIG. 3] FIG. 3 is an explanatory diagram illustrating an example of a gait state of the legged robot according to the first embodiment.
[FIG. 4] FIG. 4 is an explanatory diagram illustrating an example of a target gait parameter of the legged robot according to the first embodiment.
[FIG. 5] FIG. 5 is an explanatory diagram illustrating a variation example of a target ground-contact time as the target gait parameter illustrated in FIG. 4.
[FIG. 6] FIG. 6 is an explanatory diagram illustrating an example of calculation of a correction amount by a correction amount calculation section of the legged robot according to the first embodiment.
[FIG. 7] FIG. 7 is an explanatory diagram illustrating an example of a state in which a four-leg support period is maintained to achieve stabilization in a case where trot-walking is performed at a steppingstone by the legged robot according to the first embodiment.
[FIG. 8] FIG. 8 is an explanatory diagram illustrating an example of a state in which a two-leg support period is reduced to achieve stabilization in case where trot-walking is performed at a steppingstone by the legged robot according to the first embodiment.
[FIG. 9] FIG. 9 is an explanatory diagram illustrating an example of a state of being pushed to a cliff side during trot-walking along a cliff by the legged robot according to the first embodiment.
[FIG. 10] FIG. 10 is an explanatory diagram illustrating an example of a state of the legged robot in a case where a landing position is changed from a state illustrated in FIG. 9.
[FIG. 11] FIG. 11 is an explanatory diagram illustrating an example of a state of the legged robot in a case where only a pressure center is corrected without changing the ground-contact time from a state illustrated in FIG. 9.
[FIG. 12] FIG. 12 is an explanatory diagram illustrating an example of a state of the legged robot in a case where the four-leg support period is maintained by changing the ground-contact time from a state illustrated in FIG. 9.
[FIG. 13] FIG. 13 is an explanatory diagram illustrating an example of a state of walking at the stairs by the legged robot according to the first embodiment.

### Modes for Carrying Out the Invention

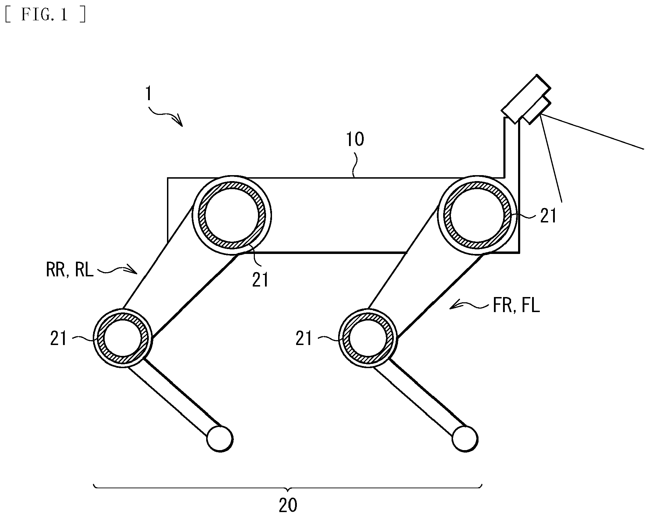

Hereinafter, embodiments of the present disclosure will be described in detail with reference to the accompanying drawings. Note that the description is made in the following order.
0. Comparative Example
1. First Embodiment (FIGs. 1 to 13)
   1.1 Configuration and Operation
   1.2 Specific Example of Operation
   1.3 Effects
   1.4. Modification Examples
2. Other Embodiments

### <0. Comparative Example>

### (Outline and Problem of Legged Robot According to Comparative Example)

In order for a legged robot to achieve stable walking in a real world, it is desirable to correct a state of the legged robot to avoid overturning immediately corresponding to unexpected disturbance such as a modeling error or an environmental disturbance. Patent Literature 1 proposes a technique of correcting a gait parameter from a self-state of the legged robot, but it is difficult to perform a balance recovery operation in a limited space without taking environment information into consideration. For example, when the legged robot is pressed in an environment in which a wall or a hole is close while stepping, the legged robot may not be stopped and may collide with the wall or fall down.

When correcting a state of the legged robot against the disturbance, it is desirable to perform a correction which can be achieved by the legged robot in consideration of a surrounding condition. In Patent Literature 2, a technique for switching between a crawl gait and a trot gait by looking at a road surface condition and a horizontal degree of a four-legged robot in the four-legged robot has been proposed. In this technique, because the static switching of the gait is merely performed without taking into consideration the dynamic stability, it is difficult to immediately cope with the disturbance. Note that the crawl gait in the four-legged robot is a gait in which three legs serve as support legs and one leg serves as a free leg during walking. The trot gait in the four-legged robot is a gait in which two legs serve as the support legs and two legs serve as the free legs during walking.

As a technique that takes into consideration dynamic stability while taking into consideration environment information, there is a technique of changing a landing position and the center of gravity trajectory in accordance with a landing prohibition region (Patent Literature 3). However, this technique only changes the landing position and the center of gravity trajectory of gait parameters, and it is difficult to dynamically change a ground-contact time, such as a free leg period and a support leg period of each leg. Therefore, in the technique described in Patent Literature 3, it is a problem that a disturbance resistance becomes small depending on a timing of becoming stable. For example, in a case where of being pushed right immediately before raising a right leg in a two-legged robot, there is a problem that a center of gravity is diverged to the right and it falls down until the right leg is landed next time without being able to stand by its right leg.

A technical reason that it is difficult to dynamically change the ground-contact time while stabilizing the center of gravity in view of a future landing position in a prior art is that it is difficult to calculate in real time a future state prediction of a legged robot. For example, as a parameter indicating a state of a legged robot, three of the ground-contact time, the pressure center (CoP), and the landing position are represented by a nonlinear relational expression, and therefore it is difficult in real time to solve the future state prediction and its inverse problem.

Therefore, it is desirable to provide a legged robot and a method of controlling a legged robot that make it possible to improve stability during walking. In this case, for example, it is desirable to determine a correction amount of a necessary minimum target parameter in a short calculation time for stabilization. For example, it is desirable to determine a correction amount of a target ground-contact time for the stabilization. Further, it is desirable to determine a correction amount of a target pressure center and a target landing position for the stabilization.

### <1. First Embodiment>

### [1.1 Configuration and Operation]

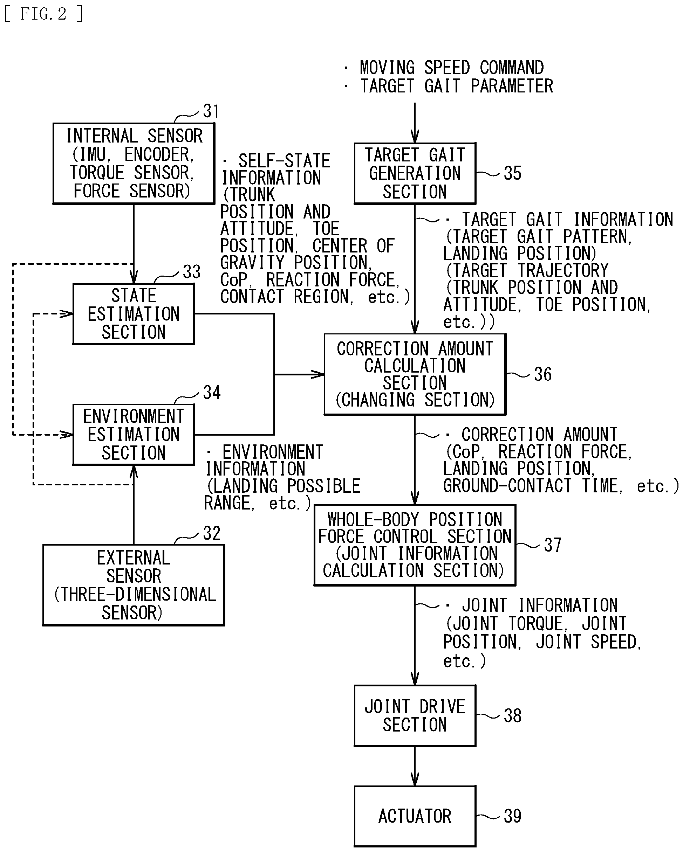

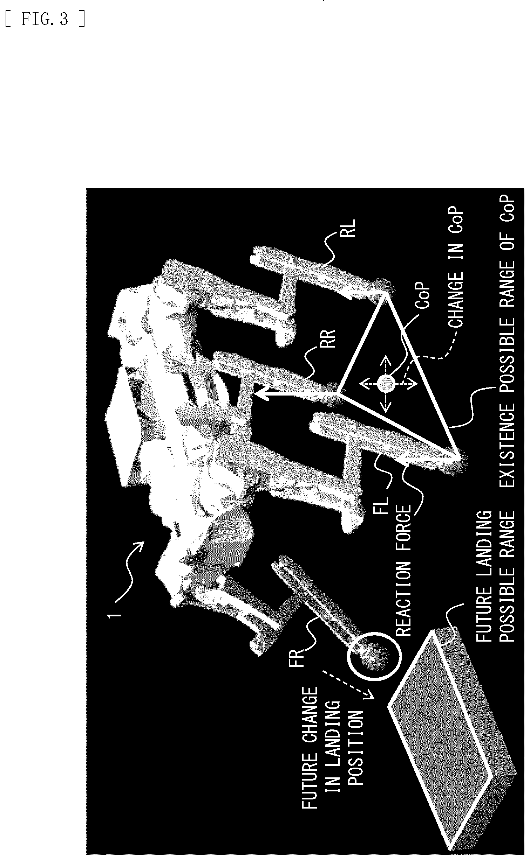

FIG. 1 schematically illustrates an example of an external configuration of a legged robot 1 according to a first embodiment of the present disclosure. FIG. 2 schematically illustrates an example of a configuration of a control system of the legged robot 1 according to the first embodiment. FIG. 3 illustrates an example of a gait state of the legged robot 1 according to the first embodiment. In addition, FIG. 3 illustrates a more specific configuration example of the legged robot 1.

As illustrated in FIGs. 1 and 3, the legged robot 1 includes a trunk 10 and a plurality of legs 20 provided on the trunk 10.

FIGs. 1 and 3 illustrate a configuration example of a four-legged robot including a right front leg FR and a left front leg FL and a right rear leg RR and a left rear leg RL as the plurality of legs 20. However, a technique of the present disclosure is applicable not only to the four-legged robot but also to a robot including three or less legs or five or more legs. Further, the technique of the present disclosure is also applicable to a robot with a hand. For example, the technique of the present disclosure is applicable to a humanoid robot having a plurality of hands and a plurality of legs. In this case, it may be a humanoid robot which performs biped walking with the right front leg FR, the left front leg FL, the right rear leg RR, and the left rear leg RL in FIGs. 1 and 3 respectively serving as a right hand, a left hand, a right leg, and a left leg.

Further, as illustrated in FIG. 2, the legged robot 1 includes an internal sensor 31, an external sensor 32, a state estimation section 33, an environment estimation section 34, a target gait generation section 35, a correction amount calculation section 36, a whole-body position force control section 37, a joint drive section 38, and an actuator 39.

The correction amount calculation section 36 corresponds to a specific example of a "changing section" in the technique of the present disclosure. The whole-body position force control section 37 corresponds to a specific example of a "joint information calculation section" in the technique of the present disclosure.

The internal sensor 31 is provided at the trunk 10 and the plurality of legs 20. The internal sensor 31 includes, for example, an IMU (inertial measurement unit), an encoder, a torque sensor, and a force sensor.

Each of the plurality of legs 20 has at least one joint 21 and is movable at one or more degrees of freedom. Each of the plurality of legs 20 is capable of controlling a joint angle of the joint 21 by the actuator 39. The encoder of the internal sensor 31 is capable of measuring the j oint angle of degrees of freedom of the j oints 21 of the plurality of legs 20. For example, assuming that, as in an example illustrated in FIG. 3, the right front leg FR, the left front leg FL, the right rear leg RR, and the left rear leg RL each have three joints 21, the encoder of the internal sensor 31 is capable of measuring the joint angle of 12 degrees of freedom in total. A torque sensor may be provided as the internal sensor 31 in the joint 21. In addition, a force sensor may be provided as the internal sensor 31 at each of toes of the plurality of legs 20.

An IMU of the internal sensor 31 may be provided in the trunk 10 so as to be able to measure a trunk position and a trunk attitude.

The external sensor 32 includes a three-dimensional sensor for performing an environment recognition.

Each processing which the state estimation section 33, the environment estimation section 34, the target gait generation section 35, the correction amount calculation section 36, and the whole-body position force control section 37 perform is achieved by one or more CPUs (Central Processing Unit), for example. Here, the processing of each section of the control system illustrated in FIG. 2 is basically performed every one ms. A faster control period is preferable, but it depends on performance of a hardware and CPU. For example, the environment estimation section 34 that uses external sensor information from the external sensor 32 such as a three-dimensional sensor normally performs calculation processing on the order of 10 ms to 100 ms because of a large amount of data to be handled. On the other hand, because it is possible to acquire information from the IMU and the encoder at a faster control period, the state estimation section 33 that uses internal sensor information thereof performs the calculation processing at a cycle faster than one ms.

The state estimation section 33 estimates a current self-state of the legged robot 1 on the basis of the internal sensor information by the internal sensor 31, and determines self-state information. The self-state information includes at least one of pieces of information of a current toe position of each of the plurality of legs 20, a current trunk position, a current trunk attitude, a current pressure center (CoP), an existence possible range of the current pressure center, a current reaction force of each of the toes of the plurality of legs 20, and a current contact region of each of the plurality of legs 20.

The state estimation section 33 acquires the internal sensor information from the internal sensor 31 such as an IMU or an encoder, for example, and estimates current trunk position and attitude information (the current trunk position and the current trunk attitude) of the legged robot 1 and the current toe position. Further, the state estimation section 33 estimates differential information of each of the current trunk position, the current trunk attitude, and the current toe position. Further, the state estimation section 33 calculates a current center-of-gravity position and a current center-of-gravity speed of the legged robot 1 using the obtained current trunk position and attitude information. Further, the state estimation section 33 calculates the existence possible range of the current pressure center (a CoP existence possible range) that can be generated by the legged robot 1 as illustrated in FIG. 3 on the basis of the current trunk position and attitude information and information on the current toe position. Further, the state estimation section 33 may further use external sensor information from the external sensor 32 such as a three-dimensional sensor to estimate the current self-state with higher accuracy.

The environment estimation section 34 estimates an external environment on the basis of the external sensor information by the external sensor 32 and determines the environment information. The environment information includes information on a future landing possible range (see FIG. 3) of each of the plurality of legs 20. Further, the environment estimation section 34 may further use the internal sensor information from the internal sensor 31 to estimate the environment information with higher accuracy.

The target gait generation section 35 generates the target gait information on the basis of speed command information of walking and the target gait parameter. The target gait information includes at least one of pieces of information of the target toe position of each of the plurality of legs 20, the target trunk position, the target trunk attitude, and the target landing position of each of the plurality of legs 20. It should be noted that hereinafter, the target toe position, the target trunk position, the target trunk attitude, and the like are collectively referred to as a target trajectory.

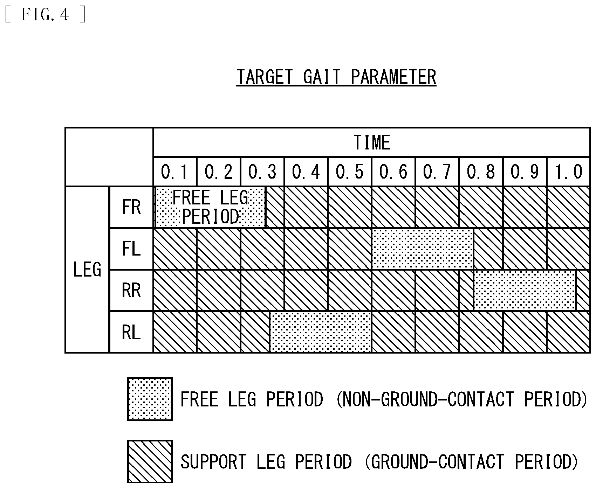

Here, FIG. 4 illustrates an example of the target gait parameter of the legged robot 1. FIG. 4 illustrates an example of a crawl gait. In FIG. 4, a vertical axis represents each leg of the right front leg FR, the left front leg FL, the right rear leg RR, and the left rear leg RL. A horizontal axis represents a ratio of time and time normalized. In FIG. 4, a non-ground-contact period and a ground-contact period of each leg are represented in a timing chart format. The non-ground-contact period represents a period during which the leg is not in contact with the ground. The leg in the non-ground-contact period becomes a free leg. The ground-contact period represents a period during which the leg is in contact with the ground. The leg in the ground-contact period becomes a support leg.

The correction amount calculation section 36 calculates a correction amount for changing (correcting) the target ground-contact time of each leg on the basis of the target gait information from the target gait generation section 35, the self-state information from the state estimation section 33, and the environment information from the environment estimation section 34. The correction amount calculation section 36 may calculate a correction amount for further changing at least one of the target landing position of each leg, the target pressure center, or the target reaction force of the toe of each leg, in addition to the target ground-contact time of each leg.

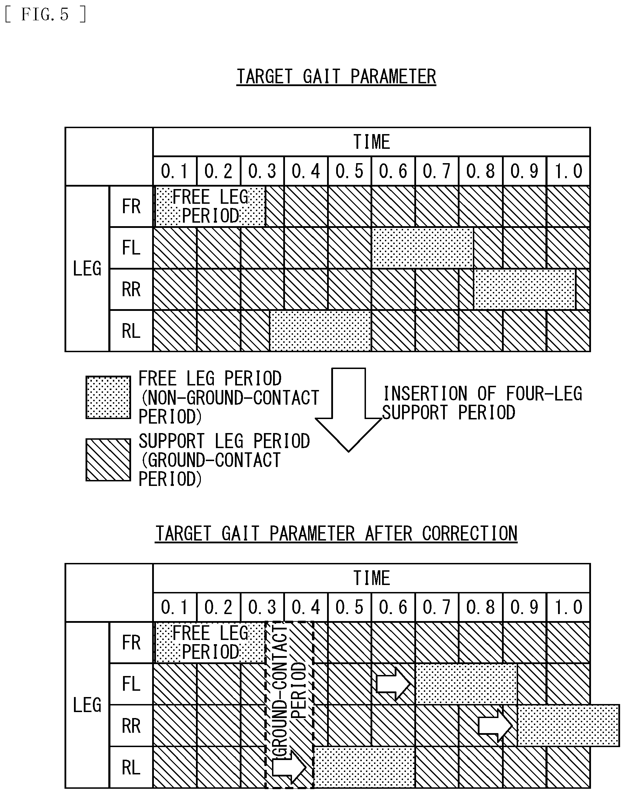

Here, FIG. 5 illustrates an example of changing the target ground-contact time as the target gait parameter illustrated in FIG. 4. As illustrated in FIG. 5, if the target ground-contact time of each of the legs is corrected by the correction amount calculation section 36 such that a period (four-leg support period) in which all of the four legs of the right front leg FR, the left front leg FL, the right rear leg RR, and the left rear leg RL are in contact with the ground is included, a range of change in the pressure center of the legged robot 1 is expanded and the overall stability is increased accordingly.

The whole-body position force control section 37 calculates the joint information for controlling at least one of the position of each leg, the trunk position, or the trunk attitude using a position control or a force control so as to achieve the ground-contact time and the landing position of each leg after the change (the correction) by the correction amount calculation section 36. In addition, the whole-body position force control section 37 calculates the joint information of each leg used for the position control or the force control so as to achieve the pressure center or the reaction force after the change (the correction) by the correction amount calculation section 36. The joint information calculated by the whole-body position force control section 37 depends on a driving method by the joint drive section 38, but in a case where the legged robot 1 is a force control robot, a joint torque may be calculated. In addition, in a case where the legged robot 1 is a position control robot, a joint position and a joint speed may be calculated. In addition, the whole-body position force control section 37 may calculate the joint torque and both the joint position and the joint speed and output the calculated joint torque and both the joint position and the joint speed to the joint drive section 38 as joint information.

The joint drive section 38 drives the joint 21 of each leg by driving the actuator 39 of the joint 21 on the basis of the joint information calculated by the whole-body position force control section 37. The joint drive section 38 may correct the joint information using feedback information from the torque sensor provided at the joint 21 and the force sensor provided in the toe of the internal sensor 31.

### (Calculation Example of Correction Amount by Correction Amount Calculation Section 36)

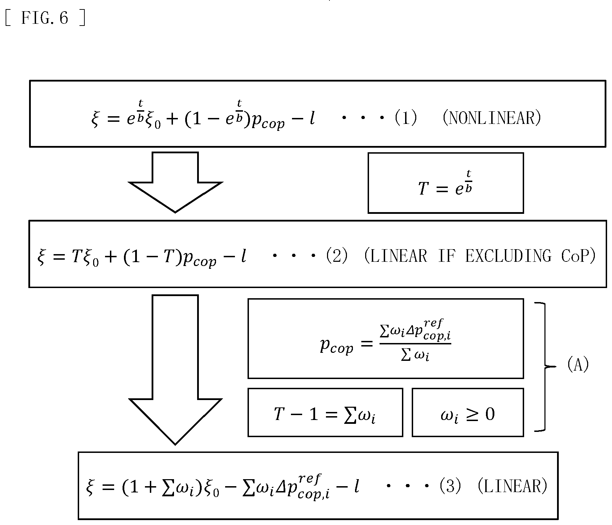

FIG. 6 illustrates an example of calculation of the correction amount by the correction amount calculation section 36.

In the calculation expression illustrated in FIG. 6, ξ represents a divergence component obtained when the center of gravity of the legged robot 1 represents a behavior of a linear inverted stretcher, and b represents a time constant thereof. Subscript 0 represents a current center of gravity divergence component and is obtained by a state estimation. ξ without the subscript is a center of gravity divergence component after t seconds. For example, when ξ, which is the center of gravity divergence component after t seconds, is 0, a movement after t seconds does not fail, and stability is ensured. S, is a parameter indicating a state of a center of gravity including a position of a center of gravity and a speed of a center of gravity. The divergence component of the center of gravity is a component which increases with time among values which are converted from the position of the center of gravity and the speed of the center of gravity. P_{cop} represents the position of the pressure center, and 1 represents a relative distance from the current toe position to the landing position of the toe after t seconds.

Expression (1) is a relational expression representing a relationship between the divergence component of the center of gravity, the pressure center, and the landing position. Although the expression (1) illustrates only one dimension, it can be extended to three dimensions, and it is possible to predict a behavior of the future center of gravity divergence component by an arbitrary number of steps by being simultaneously performed. In addition, "t" represents a time of one step in which the ground-contact state of each leg does not change and continues, but there is no problem even if it is finely discretized. Because Expression (1) is a nonlinear relational expression using an exponential function, it may not be applied to a real time control because it is difficult to handle in an optimization calculation or the like and necessitates a long calculation time.

Expression (2) is a variable of the exponential part of the Expression (1). Although a linear expression is given by excluding the pressure center, a relational expression of the pressure center and time is expressed as a multiplication, and is a nonlinear relational expression.

Expression (3) is an expression obtained by linearizing the expression (2) by using the weighted average of convex hull vertices representing the existence range of the pressure center (Expression (A)). In Expression (A), i is a parameter indicating a convex hull vertex. Because Expression (3) is represented by a linear relational expression, it is possible to calculate the correction amount of the pressure center, the time, and the landing position with a small calculation amount, and it is applicable to the stabilization control of the real time. In addition, because it is possible to handle the existence range of the pressure center as a positive value, it is possible to determine the ground-contact time correction amount in consideration of a size of the support range such as two-leg support and four-leg support. In addition, it is possible to take into consideration the future landing possible range by imposing a linear inequality on 1.

In the correction amount calculation section 36, the stabilization condition of Expression (3) and other constraint conditions are expressed by the matrix inequality, and a correction amount that minimizes the evaluation function is determined by an optimization calculation such as a two-order programming method. It is also an advantage of the stabilization condition of Expression (3) that it is easy to optimize because of the linear constraint condition. It is also possible to determine stability using Expression (3).

### [1.2 Specific Example of Operation]

Hereinafter, specific examples of an operation at the time of stabilization against a disturbance by the legged robot 1 according to the first embodiment will be described.

### (Specific Example 1)

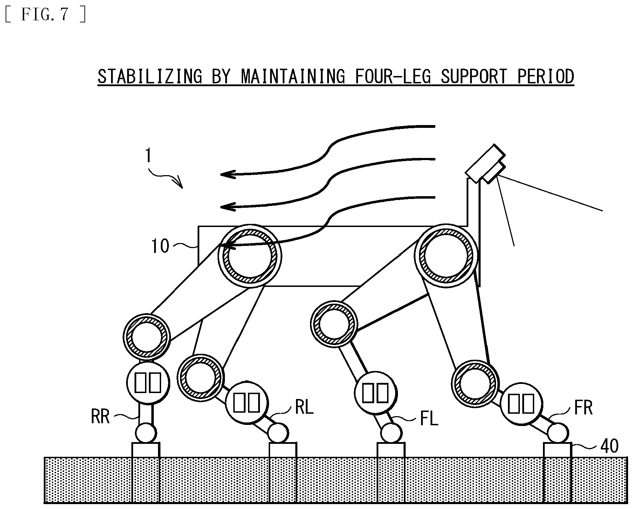

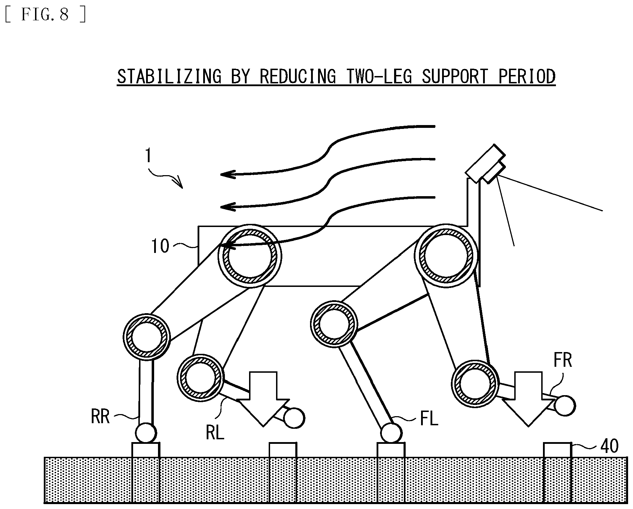

FIG. 7 and FIG. 8 illustrate a specific example of an operation of the legged robot 1 in a case where the legged robot walks at a steppingstone 40 by trot walking. FIG. 7 illustrates an example of a state in which a four-leg support period is maintained to achieve stabilization in a case where the trot-walking is performed at the steppingstone 40 by the legged robot 1. FIG. 8 illustrates an example of a state in which a two-leg support period is reduced to achieve stabilization in case where the trot-walking is performed at the steppingstone 40 by the legged robot 1.

In a case of an environment such as the steppingstone 40, it is difficult to correct the landing position because of the small scaffolding. Therefore, in the legged robot 1, as illustrated in FIG. 7, when a disturbance such as wind is applied during the four-leg support period, the four-leg support period is maintained until it is stabilized without raising the free leg.

On the other hand, when the disturbance such as wind is applied during the two-leg support period, the legged robot 1 rapidly lands as illustrated in FIG. 8 to prevent a fall. In addition, it is possible to stabilize the legged robot 1 by the method described above against a relatively small disturbance, such as a modeling error or a servo error of a motor, without being limited to the wind. In this way, in the legged robot 1, it is possible to walk even in a narrow environment in which the landing position may not be corrected by dynamically changing the ground-contact time.

### (Specific Example 2)

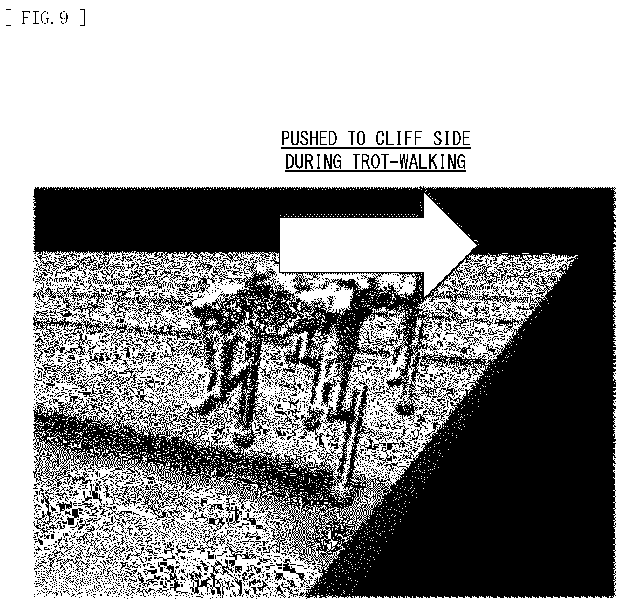

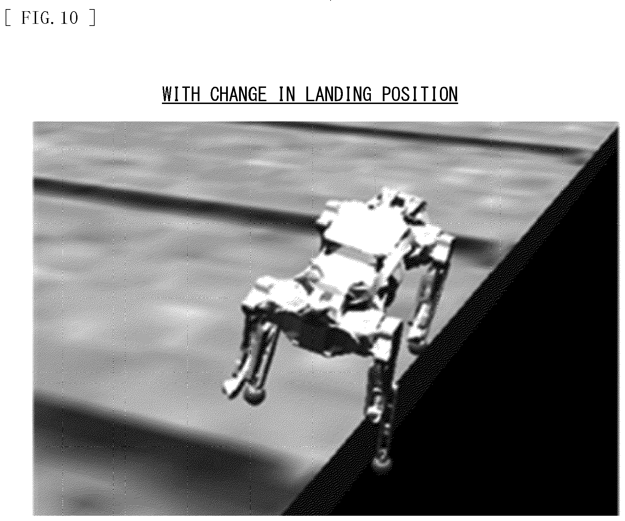

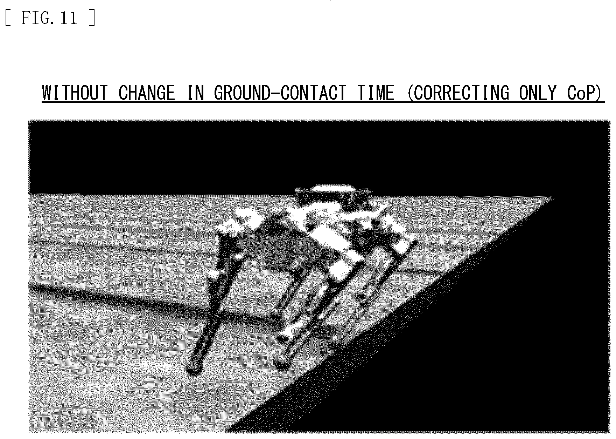

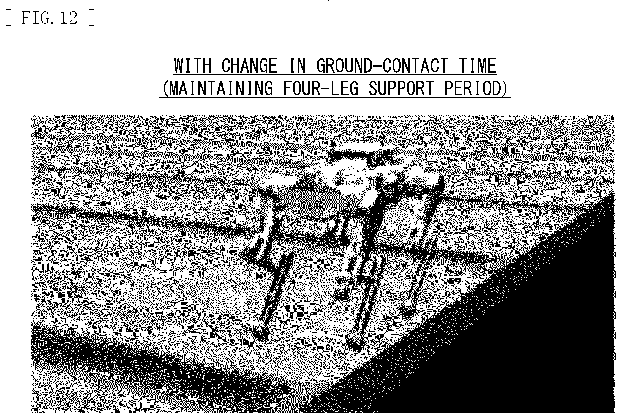

FIG. 9 illustrates an example of a state of being pushed to a cliff side during trot-walking along a cliff by the legged robot 1. FIG. 10 illustrates an example of a state of the legged robot 1 in a case where a landing position is changed from a state illustrated in FIG. 9. FIG. 11 illustrates an example of a state of the legged robot 1 in a case where only the pressure center is corrected without changing the ground-contact time from a state illustrated in FIG. 9. FIG. 12 illustrates an example of a state of the legged robot 1 in a case where the four-leg support period is maintained by changing the ground-contact time from a state illustrated in FIG. 9.

For example, in a case of being pushed to the cliff side during the trot-walking along the cliff by the legged robot 1, if the landing position is greatly changed in a cliff direction for balance recovery, there is no footage of the leg 20 as illustrated in FIG. 10, and thus, it falls off and falls down. In addition, if it is attempted to correct only the pressure center without changing the ground-contact time, the leg 20 is raised in a state where it may not be stepped as illustrated in FIG. 11, and the center of gravity is diverged and falls down.

In contrast, as illustrated in FIG. 12, in a case where the four-leg support period is maintained until it is stabilized even when it is pressed on the cliff, it is possible to continue walking without falling down by stepping on four legs. It is also possible to similarly cope with a case where an external force such as being pressed is applied when an obstacle is present such as a nearby wall or a nearby person is present, without being limited to the cliff.

### (Specific Example 3)

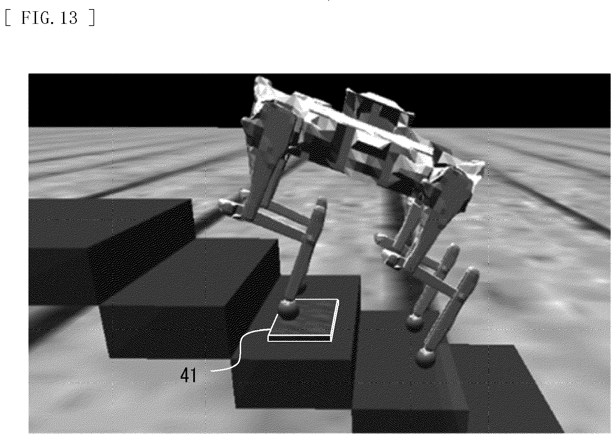

FIG. 13 illustrates an example of a state of walking at the stairs by the legged robot 1.

As illustrated in FIG. 13, even in a case where there is an irregular terrain 41 that may not be recognized at the time of walking at the stairs and becomes unstable, it is possible to stabilize the legged robot 1 by dynamically increasing the four-leg support period while changing the landing position. Further, in the legged robot 1, it is possible to minimize a decrease in the speed by increasing the minimum ground-contact time which can be stabilized only when it becomes unstable.

### [1.3 Effects]

As described above, according to the legged robot 1 of the first embodiment, because at least the target ground-contact time of each leg is changed on the basis of the target gait information, the self-state information, and the environment information, it is possible to improve stability during walking. In addition, it is possible to establish compatibility between the walking speed, the stability, and landing accuracy.

According to the legged robot 1 of the first embodiment, it is possible to reduce a calculation cost by linearizing the nonlinear relational expression relating to the changes in the ground-contact time, the pressure center, and the landing position. Thus, because it is possible to reduce the calculation time, it is possible to immediately correct the ground-contact time corresponding to the disturbance. By dynamically correcting the ground-contact time, it is possible to achieve stabilization even if a disturbance is applied in an environment where the landing possible range is limited. For example, it is effective to improve stability in walking on the steppingstone 40, in the presence of a cliff and an obstacle, and at the stairs with poor road surface conditions.

Further, in the legged robot 1 according to the first embodiment, when calculating the correction amount for changing (correcting) the target ground-contact time or the like of each leg in the correction amount calculation section 36, the stabilization condition is expressed by a linear relational expression and optimized globally using a mathematical plan. It is thereby possible to calculate the minimum amount of correction necessary for stabilization. For example, increasing the four-leg support period increases the stability but decreases the moving speed. In the legged robot 1 according to the first embodiment, it is possible to change the minimum ground-contact time necessary for stabilization, and thus it is possible to minimize the decrease in the moving speed.

Further, according to the legged robot 1 of the first embodiment, because the relational expression used for calculation of the correction amount in the correction amount calculation section 36 is linear, a calculation load is small and it is possible to perform parallel calculation with a plurality of threads. In addition, it is possible to change the ground-contact time in consideration of a magnitude of the existence range of the pressure center and the landing position. Thus, it is possible to evaluate a plurality of ground patterns in real time. It is possible to automatically determine not only the ground-contact time but also which legs and the number of legs to be moved next. Thus, it is possible to perform a balance restoring operation more flexibly.

Note that the effects described in this specification are merely an example and are not limited, and other effects may be provided.

### [1.4 Modification Examples]

The legged robot 1 may be achieved by a two-legged robot. In this case, it is possible to optimize the two-leg support period and a single-leg support period of each leg. In addition, in a case of a humanoid having both hands, it is also applicable to stabilization using both hands. Further, it is also applicable to a legged robot having four or more legs as the legged robot 1. In a case of the humanoid with both hands, the correction amount calculation section 36 may calculate the correction amount for changing (correcting) the target ground-contact time of each leg on the basis of the target gait information from the target gait generation section 35, the self-state information from the state estimation section 33, and the environment information from the environment estimation section 34, and the correction amount calculation section 36 may additionally calculate a correction amount for changing the target ground-contact position of each hand.

The whole-body position force control section 37 may calculate the joint information which changes the order in which each leg is to be stepped and the number of each leg to be in contact with the ground so as to achieve the contact time of each leg after the change (the correction) by the correction amount calculation section 36. Thus, it is possible to correct which of the plurality of legs 20 is to be in contact with the ground in addition to the ground-contact time. For example, in case of four legs, by using a range of existence of 16 types of correction amounts of ground contact and non-ground contact for each leg to perform 16 types of optimization calculation in parallel, and by correcting an operation using the ground contact pattern having the smallest correction amount, it is possible to determine which leg is to be in contact with the ground next. Because a technique according to the present embodiment has a small calculation load, it is advantageous in that it is possible to increase the number of threads and perform parallel calculation.

The present application claims the benefit of Japanese Priority Patent Application JP2020-34008 filed with the Japan Patent Office on February 28, 2020.

It should be understood by those skilled in the art that various modifications, combinations, sub-combinations and alterations may occur depending on design requirements and other factors insofar as they are within the scope of the appended claims

## Claims

1. A legged robot (1) comprising:
a trunk (10);
a plurality of legs (RR, RL, FR, FL) provided on the trunk; and
a changing section (36) that:
is configured to change
a target ground-contact time of each of the legs, on a basis of target gait information, self-state information, and environment information, and that is configured to change
a target landing position of each of the legs in addition to the target ground-contact time of each of the legs, on the basis of the target gait information, the self-state information, and the environment information.

2. The legged robot according to claim 1, wherein the changing section changes a target pressure center or a target reaction force of a toe of each of the legs in addition to the target ground-contact time of each of the legs, on the basis of the target gait information, the self-state information, and the environment information.

3. The legged robot according to claim 1, wherein the target gait information includes at least one of pieces of information of a target toe position of each of the legs, a target trunk position, a target trunk attitude, and a target landing position of each of the legs.

4. The legged robot according to claim 1, wherein the self-state information includes at least one of pieces of information of a current toe position of each of the legs, a current trunk position, a current trunk attitude, a current pressure center, an existence possible range of the current pressure center, a current reaction force of a toe of each of the legs, and a current contact region of each of the legs.

5. The legged robot according to claim 1, wherein the environment information includes information on a future landing possible range of each of the legs.

6. The legged robot according to claim 1, further comprising a target gait generation section (35) that generates the target gait information on a basis of speed command information of walking and a target gait parameter.

7. The legged robot according to claim 1, further comprising:
an internal sensor (31); and
a state estimation section (33) that estimates a current self state on a basis of sensor information by the internal sensor and determines the self-state information.

8. The legged robot according to claim 1, further comprising:
an external sensor (32); and
an environment estimation section (34) that estimates an external environment on a basis of sensor information by the external sensor and determines the environment information.

9. The legged robot according to claim 1, further comprising:
a joint information calculation section (37) that calculates joint information for controlling at least one of a position of each of the legs, a trunk position, or a trunk attitude using a position control or a force control to achieve a ground-contact time and a landing position of each of the legs after the change by the changing section; and
a joint drive section (38) that drives a joint of each of the legs on a basis of the joint information.

10. The legged robot according to claim 2, further comprising:
a joint information calculation section (37) that calculates joint information of each of the legs used for a position control or a force control to achieve a pressure center or a reaction force after the change by the changing section; and
a joint drive section (38) that drives a joint of each of the legs on a basis of the joint information.

11. The legged robot according to claim 1, wherein each of the legs is movable at one or more degrees of freedom.

12. The legged robot according to claim 1, further comprising:
a joint information calculation section (37) that calculates joint information that changes order in which each of the legs is to be stepped and the number of the legs to be in contact with ground to achieve a ground-contact time of each of the legs after the change by the changing section; and
a joint drive section (38) that drives a joint of each of the legs on a basis of the joint information.

13. The legged robot according to claim 1, further comprising a plurality of hands, wherein
the changing section changes a target ground-contact position of each of the hands in addition to the target ground-contact time of each of the legs, on the basis of the target gait information, the self-state information, and the environment information.

14. A method of controlling a legged robot (1), the method comprising:
acquiring target gait information, self-state information, and environment information in the legged robot that includes a trunk and a plurality of legs (RR, RL, FR, FL) provided on the trunk; and, based on this information, selectively
changing a target ground-contact time of each of the legs, on a basis of the target gait information, the self-state information, and the environment information; and/or
changing a target landing position of each of the legs in addition to the target ground-contact time of each of the legs, on the basis of the target gait information, the self-state information, and the environment information.

## Patentansprüche

1. Roboter (1) mit Beinen, umfassend:
einen Rumpf (10);
eine Vielzahl von Beinen (RR, RL, FR, FL), die auf dem Rumpf bereitgestellt sind; und
einen Änderungsbereich (36), der: konfiguriert ist, um eine Zielbodenkontaktzeit jedes der Beine auf einer Basis von Zielganginformationen, Selbstzustandsinformationen und Umgebungsinformationen zu ändern, und der konfiguriert ist, um
eine Ziellandeposition jedes der Beine zusätzlich zu der Zielbodenkontaktzeit jedes der Beine auf der Basis der Zielganginformationen, der Selbstzustandsinformationen und der Umgebungsinformationen zu ändern.

2. Roboter mit Beinen nach Anspruch 1, wobei der Änderungsbereich ein Zieldruckzentrum oder eine Zielreaktionskraft eines Zehs jedes der Beine zusätzlich zu der Zielbodenkontaktzeit jedes der Beine auf der Basis der Zielganginformationen, der Selbstzustandsinformationen und der Umgebungsinformationen ändert.

3. Roboter mit Beinen nach Anspruch 1, wobei die Zielganginformationen mindestens eines von Informationen einer Zielzehenposition jedes der Beine, einer Zielrumpfposition, einer Zielrumpfhöhe und einer Ziellandeposition jedes der Beine einschließen.

4. Roboter mit Beinen nach Anspruch 1, wobei die Selbstzustandsinformationen mindestens eines von Informationen einer aktuellen Zehenposition jedes der Beine, einer aktuellen Rumpfposition, einer aktuellen Rumpfhöhe, eines aktuellen Druckzentrums, eines möglichen Existenzbereichs des aktuellen Druckzentrums, einer aktuellen Reaktionskraft einer Zehe jedes der Beine und einer aktuellen Kontaktregion jedes der Beine einschließen.

5. Roboter mit Beinen nach Anspruch 1, wobei die Umgebungsinformationen Informationen über einen zukünftigen möglichen Landebereich jedes der Beine einschließen.

6. Roboter mit Beinen nach Anspruch 1, ferner umfassend einen Zielgangerzeugungsbereich (35), der die Zielganginformationen auf einer Basis von Geschwindigkeitsbefehlsinformationen von Laufen und eines Zielgangparameters erzeugt.

7. Roboter mit Beinen nach Anspruch 1, ferner umfassend:
einen internen Sensor (31); und
einen Zustandsschätzungsbereich (33), der einen aktuellen Selbstzustand auf einer Basis von Sensorinformationen durch den internen Sensor schätzt und die Selbstzustandsinformationen bestimmt.

8. Roboter mit Beinen nach Anspruch 1, ferner umfassend:
einen externen Sensor (32); und
einen Umgebungsschätzungsbereich (34), der eine externe Umgebung auf einer Basis von Sensorinformationen durch den externen Sensor schätzt und die Umgebungsinformationen bestimmt.

9. Roboter mit Beinen nach Anspruch 1, ferner umfassend:
einen Gelenkinformationsberechnungsbereich (37), der Gelenkinformationen zum Steuern mindestens einer von einer Position jedes der Beine, einer Rumpfposition oder einer Rumpfhöhe unter Verwendung einer Positionssteuerung oder einer Kraftsteuerung berechnet, um eine Bodenkontaktzeit und eine Landeposition jedes der Beine nach der Änderung durch den Änderungsbereich zu erreichen; und
einen Gelenkantriebsbereich (38), der ein Gelenk jedes der Beine auf einer Basis der Gelenkinformationen antreibt.

10. Roboter mit Beinen nach Anspruch 2, ferner umfassend:
einen Gelenkinformationsberechnungsbereich (37), der Gelenkinformationen jedes der Beine berechnet, die für eine Positionssteuerung oder eine Kraftsteuerung verwendet werden, um ein Druckzentrum oder eine Reaktionskraft nach der Änderung durch den Änderungsbereich zu erreichen; und
einen Gelenkantriebsbereich (38), der ein Gelenk jedes der Beine auf einer Basis der Gelenkinformationen antreibt.

11. Roboter mit Beinen nach Anspruch 1, wobei jedes der Beine in einem oder mehreren Freiheitsgraden bewegbar ist.

12. Roboter mit Beinen nach Anspruch 1, ferner umfassend:
einen Gelenkinformationsberechnungsbereich (37), der Gelenkinformationen berechnet, die eine Reihenfolge, in der jedes der Beine auftreten soll und die Anzahl der Beine ändern, die in Kontakt mit dem Boden sein sollen, um eine Bodenkontaktzeit jedes der Beine nach der Änderung durch den Änderungsbereich zu erreichen; und
einen Gelenkantriebsbereich (38), der ein Gelenk jedes der Beine auf einer Basis der Gelenkinformationen antreibt.

13. Roboter mit Beinen nach Anspruch 1, ferner umfassend eine Vielzahl von Händen, wobei
der Änderungsbereich eine Zielbodenkontaktposition jeder der Hände zusätzlich zu der Zielbodenkontaktzeit jedes der Beine auf der Basis der Zielganginformationen, der Selbstzustandsinformationen und der Umgebungsinformationen ändert.

14. Verfahren zum Steuern eines Roboters (1) mit Beinen, das Verfahren umfassend:
Erfassen von Zielganginformationen, Selbstzustandsinformationen und Umgebungsinformationen in dem Roboter mit Beinen, der einen Rumpf und eine Vielzahl von Beinen (RR, RL, FR, FL) einschließt, die auf dem Rumpf bereitgestellt sind; und, basierend auf diesen Informationen, wahlweise
Ändern einer Zielbodenkontaktzeit jedes der Beine auf einer Basis der Zielganginformationen, der Selbstzustandsinformationen und der Umgebungsinformationen; und/oder
Ändern einer Ziellandeposition jedes der Beine zusätzlich zu der Zielbodenkontaktzeit jedes der Beine auf der Basis der Zielganginformationen, der Selbstzustandsinformationen und der Umgebungsinformationen.

## Revendications

1. Robot à jambes (1) comprenant :
un tronc (10) ;
une pluralité de jambes (RR, RL, FR, FL) fournies sur le tronc ; et
une section de changement (36) qui : est configurée pour changer
un temps de contact au sol cible de chacune des jambes, en fonction d'informations de démarche cible, d'informations d'état personnel et d'informations d'environnement, et qui est configurée pour changer
une position d'arrivée cible de chacune des jambes en plus du temps de contact au sol cible de chacune des jambes, en fonction des informations de démarche cible, des informations d'état personnel et des informations d'environnement.

2. Robot à jambes selon la revendication 1, dans lequel la section de changement change un centre de pression cible ou une force de réaction cible d'un orteil de chacune des jambes en plus du temps de contact au sol cible de chacune des jambes, en fonction des informations de démarche cible, des informations d'état personnel et des informations d'environnement.

3. Robot à jambes selon la revendication 1, dans lequel les informations de démarche cible comportent au moins l'un parmi les éléments d'information d'une position d'orteil cible de chacune des jambes, d'une position de tronc cible, d'une posture de tronc cible et d'une position d'arrivée cible de chacune des jambes.

4. Robot à jambes selon la revendication 1, dans lequel les informations d'état personnel comportent au moins l'un parmi des éléments d'information d'une position d'orteil actuelle de chacune des jambes, d'une position de tronc actuelle, d'une posture de tronc actuelle, d'un centre de pression actuel, d'une plage possible d'existence du centre de pression actuel, d'une force de réaction actuelle d'un orteil de chacune des jambes et d'une région de contact actuelle de chacune des jambes.

5. Robot à jambes selon la revendication 1, dans lequel les informations d'environnement comportent des informations relatives à une plage possible d'arrivée future de chacune des jambes.

6. Robot à jambes selon la revendication 1, comprenant en outre une section de génération de démarche cible (35) qui génère les informations de démarche cible en fonction d'informations d'instruction de vitesse de marche et d'un paramètre de démarche cible.

7. Robot à jambes selon la revendication 1, comprenant en outre :
un capteur interne (31) ; et
une section d'estimation d'état (33) qui estime un état personnel actuel en fonction d'informations de capteur par le capteur interne et détermine les informations d'état personnel.

8. Robot à jambes selon la revendication 1, comprenant en outre :
un capteur externe (32) ; et
une section d'estimation d'environnement (34) qui estime un environnement externe en fonction d'informations de capteur par le capteur externe et détermine les informations d'environnement.

9. Robot à jambes selon la revendication 1, comprenant en outre :
une section de calcul d'informations d'articulation (37) qui calcule des informations d'articulation permettant de commander au moins l'une parmi une position de chacune des jambes, une position de tronc, ou une posture de tronc à l'aide d'une commande de position ou d'une commande de force pour obtenir un temps de contact au sol et une position d'arrivée de chacune des jambes après le changement par la section de changement ; et
une section d'entraînement d'articulation (38) qui entraîne une articulation de chacune des jambes en fonction des informations d'articulation.

10. Robot à jambes selon la revendication 2, comprenant en outre :
une section de calcul d'informations d'articulation (37) qui calcule des informations d'articulation de chacune des jambes utilisées pour une commande de position ou une commande de force pour obtenir un centre de pression ou une force de réaction après le changement par la section de changement ; et
une section d'entraînement d'articulation (38) qui entraîne une articulation de chacune des jambes en fonction des informations d'articulation.

11. Robot à jambes selon la revendication 1, dans lequel chacune des jambes peut être déplacée à un ou plusieurs degrés de liberté.

12. Robot à jambes selon la revendication 1, comprenant en outre :
une section de calcul d'informations d'articulation (37) qui calcule des informations d'articulation qui changent l'ordre dans lequel chacune des jambes doit être posée et le nombre des jambes devant être en contact avec le sol pour obtenir un temps de contact au sol de chacune des jambes après le changement par la section de changement ; et
une section d'entraînement d'articulation (38) qui entraîne une articulation de chacune des jambes en fonction des informations d'articulation.

13. Robot à jambes selon la revendication 1, comprenant en outre une pluralité de mains, dans lequel
la section de changement change une position de contact au sol cible de chacune des mains en plus du temps de contact au sol cible de chacune des jambes, en fonction des informations de démarche cible, des informations d'état personnel et des informations d'environnement.

14. Procédé de commande d'un robot à jambes (1), le procédé comprenant :
l'acquisition d'informations de démarche cible, d'informations d'état personnel et d'informations d'environnement dans le robot à jambes qui comporte un tronc et une pluralité de jambes (RR, RL, FR, FL) fournies sur le tronc ; et, en fonction de ces informations, sélectivement
le changement d'un temps de contact au sol cible de chacune des jambes, en fonction des informations de démarche cible, des informations d'état personnel et des informations d'environnement ; et/ou
le changement d'une position d'arrivée cible de chacune des jambes en plus du temps de contact au sol cible de chacune des jambes, en fonction des informations de démarche cible, des informations d'état personnel et des informations d'environnement.
